# EUROPÄISCHE PATENTSCHRIFT

(11) **EP 1 052 894 B1**
(45) Veröffentlichungstag und Bekanntmachung des Hinweises auf die Patenterteilung: **14.05.2003**
(21) Anmeldenummer: 99910161.1
(22) Anmeldetag: 28.01.1999
(51) Int. Cl.: A01J 7/02

(54) **VERFAHREN ZUR REINIGUNG VON MELKANLAGEN**
METHOD FOR CLEANING MILKING EQUIPMENT
PROCEDE POUR NETTOYER DES INSTALLATIONS DE TRAITE

(30) Priorität: 06.02.1998 DE 19804829
(43) Veröffentlichungstag der Anmeldung: 22.11.2000
(73) Patentinhaber: Ecolab GmbH & Co. OHG, 40589 Düsseldorf (DE)
(72) Erfinder: SCHWARZ, Peter, D-40699 Erkrath (DE); BRAGULLA, Siegfried, D-40789 Monheim (DE)
(86) Internationale Anmeldenummer: EP9900564
(87) Internationale Veröffentlichungsnummer: WO99039568

(56) Entgegenhaltungen:
- EP-A- 0 761 091
- EP-A- 0 772 971
- DE-A- 19 640 201
- US-A- 5 405 452

## Beschreibung

Die im folgenden beschriebene Erfindung liegt auf dem Gebiet der Reinigung von Geräten, die mit Milch in Berührung kommen und betrifft insbesondere die Reinigung von Melkanlagen.

Nach dem bisherigen Stand der Technik werden zur Reinigung von Geräten, die mit Milch in Berührung kommen, insbesondere zur Reinigung von Melkanlagen, stets mehr oder weniger stark alkalische Reinigungslösungen verwendet. Durch Anwendung dieser alkalischen Reinigungslösungen sollen sowohl fetthaltige als auch proteinhaltige Rückstände aus den Geräten, Leitungen und Behältern entfernt werden. Eine möglichst vollständige Entfernung ist wünschenswert, da ansonsten diese Rückstände als Nährböden für Bakterien und andere Keime dienen können, die dann zu einer Verunreinigung der später verarbeiteten Milch führen. Die alkalischen Reinigungslösungen werden aus diesem Grund vor der Einwirkung auf die zu reinigenden Geräte erhitzt, um die Reinigungsleistung zu steigern. In vielen Fällen werden zusätzlich aktivchlorabspaltende Mittel in den Reinigungslösungen eingesetzt, die neben einer zusätzlichen Reinigung auch eine desinfizierende Wirkung beisteuern. Auch andere antimikrobiell wirksame Substanzen, insbesondere quartäre Ammoniumverbindungen können in diesen alkalischen Reinigungslösungen eingesetzt werden. Nach Entfernung der alkalischen Reinigungslösungen aus den Geräten werden diese in der Regel gespült und gegebenenfalls noch vorhandene Reinigungsmittelreste mit Säuren neutralisiert. In vielen Fällen wird anschließend noch ein zusätzlicher Desinfektionsgang eingeschaltet, bei dem die Geräte mit einer Lösung eines wirksamen Desinfektionsmittels behandelt und gegebenenfalls nochmals gespült werden.

Es war lange Zeit üblich, die Reinigungslösungen jeweils vor Gebrauch frisch anzusetzen und nach erfolgter Reinigung der Geräte in das Abwasser abzulassen. Wegen des hohen Verbrauchs an Chemikalien, Wasser und Energie sind in jüngerer Zeit Verfahren entwickelt worden, bei denen die alkalische Reinigungslösung unter bestimmten Umständen wiederverwendet werden kann. So wird beispielsweise in der amerikanischen Patentschrift 5,405,452 ein Verfahren beschrieben, bei dem es durch eine ausreichend lange Vorspülung der Melkanlage möglich wird, die im nachfolgenden Reinigungsschritt verwendete alkalische Reinigungslösung nach Gebrauch wieder aufzufangen und erneut bei späteren Reinigungsvorgängen zu verwenden. Ein ähnliches Verfahren wird in der europäischen Patentanmeldung 772 971 vorgeschlagen, wobei hier zum Vorspülen eine wäßrige Lösung verwendet wird, die durch Auffangen des Desinfektionsmittels aus dem späteren Desinfektionsgang einen sauren pH-Wert aufweist.

Demgegenüber sind saure Reinigungsmittel bisher zur Reinigung von Geräten der Milchwirtschaft, insbesondere zur Reinigung von Melkanlagen, abgesehen von reinen Spül- und Desinfektionsschritten, nicht verwendet worden. Hier glaubte man, nur durch Zusatz besonderer Wirkstoffe, beispielsweise von Enzymen, wie er in der nicht vorveröffentlichten deutschen Patentanmeldung DE 196 40 201 beschrieben ist, zu einem ausreichenden Reinigungsergebnis zu kommen.

Bei der Reinigung von Geräten zur Milchgewinnung, insbesondere bei der Reinigung von Melkanlagen, mit alkalischen Reinigungslösungen traten aber nach wie vor Schwierigkeiten vor allem an schlecht durchströmten Teilen, wie beispielsweise Milchmengenzählem, in Form von hartnäckigen Belägen auf. Besonders störend wurden derartige Beläge bei den Verfahren, in denen die alkalische Reinigungslösung wiederverwendet (gestapelt) wurde. Die Vorteile des Stapelverfahrens wurden dadurch zumindest zum Teil zunichte gemacht, da es immer wieder notwendig wurde, die besonders anfälligen Teile der Geräte einer besonderen Zwischenreinigung zu unterziehen, die den ansonsten weitgehend automatisierten Verfahrensablauf unterbrach. Es war eine der wesentlichen Aufgaben der vorliegenden Erfindung, hier eine Verbesserung zu entwickeln.

Die Erfindung beruht auf der überraschenden Erkenntnis, daß es möglich ist, mit sauren Reinigungslösungen auch ohne besondere Zusätze, wie beispielsweise Enzyme oder peroxidische Verbindungen, Melkanlagen so gründlich zu reinigen, daß die Verwendung anderer Reinigungslösungen, insbesondere alkalischer Reinigungslösungen, vollkommen entbehrlich wird. Dabei werden überraschenderweise auch die im Stapelverfahren so störenden hartnäckigen Beläge in Problemzonen vollständig vermieden.

Gegenstand der Erfindung ist daher ein Verfahren zur Reinigung von Melkanlagen unter Verwendung einer wäßrigen Reinigungslösung, bei dem diese wäßrige Reinigungslösung wenigstens zum Teil nach erfolgter Reinigung der Anlage aufgefangen und nach erneutem Gebrauch der Melkanlage wiederum zur Reinigung verwendet wird, bei dem die Reinigungslösung einen sauren pH-Wert aufweist und bei dem zur Reinigung der Melkanlage neben dieser sauren Reinigungslösung keine alkalischen Reinigungslösung eingesetzt wird. Üblicherweise wird die wäßrige saure Reinigungslösung wenigstens 6 mal, vorzugsweise wenigstens 14 mal zur Reinigung verwendet, ehe sie durch frische Reinigungslösung ersetzt wird.

Durch die Verwendung einer wäßrigen sauren Lösung zur Reinigung der Melkanlagen anstelle der bisher gebräuchlichen alkalischen Reinigungslösung ist es ohne weiteres möglich, das Verfahren mit denselben Reinigungsautomaten zu betreiben, die für die Stapelreinigung, beispielsweise von Melkanlagen, unter Verwendung der alkalischen Reinigungsmittellösung entwickelt worden sind. Es werden keine zusätzlichen Stapeltanks benötigt und es wird die Verwendung von starkem Alkali vermieden, wobei auf die üblicherweise in den alkalischen Reinigungsmittellösungen enthaltenen wenig umweltverträglichen Komplexbildner vollständig verzichtet werden kann.

Auch im erfindungsgemäßen Verfahren wird vorzugsweise vor dem eigentlichen Reinigungsgang mit der sauren Reinigungslösung die Melkanlage zunächst mit Wasser oder einer wiederaufgefangenen Nachspüllösung aus einem der vorigen Reinigungsgänge vorgespült. Üblicherweise schließt sich an den Reinigungsgang dann wiederum ein Spülgang an, bei dem im allgemeinen reines Wasser verwendet wird. Sofern eine besondere Desinfektion der Geräte gewünscht wird und die Behandlung mit der sauren Reinigungslösung diese Desinfektionsleistung nicht bereits erbringt, kann es zweckmäßig sein, unmittelbar nach dem Reinigungsgang oder nach einem gegebenenfalls zwischengeschalteten Spülgang die Geräte mit einer eigenen Desinfektionslösung zu behandeln und anschließend nochmals mit Wasser zu spülen. Bei ausreichender Beständigkeit der Desinfektionslösung ist es möglich, auch diese Lösung zu stapeln und wiederzuverwenden. In anderen Fällen, insbesondere dann, wenn es sich um ein saures Desinfektionsmittel handelt, ist es möglich, die aus dem Gerät nach der Desinfektion austretende Lösung aufzufangen und zum Vorspülen im erfindungsgemäßen Verfahren zu verwenden. Auch das im Zwischenspülgang und im abschließenden Spülgang verwendete Wasser kann nach Gebrauch, sofern vorhanden, einem Tank zugeführt werden, dessen Inhalt dann zum Vorspülen verwendet wird.

Das erfindungsgemäße Verfahren kann grundsätzlich allein von Hand ausgeführt und gesteuert werden. Vorzugsweise wird es aber weitgehend automatisch mit Hilfe geeigneter Reinigungsapparaturen durchgeführt, wie sie beispielsweise in US 5,405,452 und EP 772 971 beschrieben sind. Die zur Reinigung, zum Spülen und gegebenenfalls zum Desinfizieren verwendeten Flüssigkeiten werden dabei mit Hilfe geeigneter Rohrleitungen, Ventile und Pumpen durch die zu reinigenden Geräte, insbesondere Melkanlagen, hindurchgepumpt und dort entweder für eine bestimmte Zeit belassen oder für eine Zeit im Kreislauf umgewälzt, bis das gewünschte Ergebnis erreicht ist. Auf eine genauere Beschreibung geeigneter Reinigungsautomaten wird daher unter ausdrücklichem Hinweis auf die Offenbarung der beiden obengenannten Druckschriften an dieser Stelle verzichtet. In jedem Falle wird das Verfahren so geführt, daß die wäßrige saure Reinigungslösung wenigstens zum Teil beim nächsten Reinigungsgang erneut verwendet wird. Vorzugsweise werden mehr als 80 %, insbesondere mehr als 90 % der eingesetzten wäßrigen sauren Reinigungslösung wieder im Stapeltank aufgefangen und erneut bei der nächsten Reinigung verwendet. Soweit nötig, wird die Lösung von Zeit zu Zeit durch Zusatz von Säure oder Reinigungsmittel und Wasser ergänzt.

Während im erfindungsgemäßen Verfahren Spülflüssigkeiten und gegebenenfalls Desinfektionslösung üblicherweise im nicht erwärmten Zustand eingesetzt werden, wird die wäßrige saure Reinigungslösung vorzugsweise vor Einwirken auf die Melkanlagen erwärmt, um lange Einwirkzeiten zu vermeiden. Besonders bevorzugt sind Temperaturen oberhalb des Erweichungspunktes von Milchfett, insbesondere oberhalb von etwa 40 °C, wobei Temperaturen zwischen etwa 50 °C und etwa 90 °C ganz besonders bevorzugt werden. Es handelt sich bei diesen Angaben um die Temperaturen, mit denen die Reinigungslösung in die Geräte eintritt.

Die erfindungsgemäß verwendete wäßrige saure Reinigungslösung enthält starke anorganische oder organische Säure in einer Menge die ausreicht, der Lösung im Gebrauch einen pH-Wert unter 3, vorzugsweise unter 2,5 und insbesondere unter 2 zu geben (gemessen bei 20 °C). Besonders bevorzugt wird ein pH-Wert der Reinigungslösung zwischen etwa 0,5 und etwa 2,0. Vorzugsweise sind die Säuren in der angewendeten Reinigungslösung in Mengen zwischen etwa 0,1 und etwa 1,5 Gew.-%, insbesondere in Mengen von etwa 0,2 bis etwa 0,6 Gew.-% enthalten. Besonders gute Reinigungsergebnisse werden mit Phosphorsäure, Schwefelsäure, Amidosulfonsäure, Metansulfonsäure, Ameisensäure und Zitronensäure erreicht. Auch Mischungen mehrerer Säuren sind geeignet. Besonders bevorzugt werden von diesen Säuren Phosphorsäure, Methansulfonsäure, Amidosulfonsäure und Mischungen dieser Säuren.

Im einfachsten Fall können die wäßrigen sauren Reinigungslösungen Säure als alleinigen Wirkstoff enthalten. Vorzugsweise enthält die Reinigungslösung darüber hinaus aber weitere Wirkstoffe, insbesondere aus der Gruppe der Tenside.

Durch Mitverwendung von Tensiden wird die Fettentfernung erleichtert und die vollständige Benetzung aller Oberflächen beschleunigt. Grundsätzlich eignen sich Tenside aus allen bekannten Klassen, das heißt, nichtionische Tenside, anionische Tenside, kationische Tenside und amphotere Tenside. Auch Mischungen aus mehreren Tensiden aus einer Klasse oder aus mehreren Klassen können verwendet werden. Da im erfindungsgemäßen Verfahren meist auf Schaumarmut Wert gelegt wird, werden schaumarme Tenside, insbesondere nichtionische Tenside, bevorzugt verwendet. Von Bedeutung sind weiterhin Kombinationen aus nichtionischen Tensiden und anionischen Tensiden und Kombinationen aus nichtionischen Tensiden und kationischen Tensiden.

Geeignete nichtionische Tenside sind insbesondere die Anlagerungsprodukte von 3 bis 20 Mol Ethylenoxid (EO) an primäre C₁₀ - C₂₀-Alkohole, wie zum Beispiel Kokos- oder Talgfettalkohole, an Oleylalkohol, an Oxoalkohole oder an sekundäre Alkohole dieser Kettenlänge. Ebenfalls geeignet sind die entsprechenden Ethoxylierungsprodukte anderer langkettiger Verbindungen, beispielsweise der Fettsäuren und der Fettsäureamide mit 12 bis 18 C-Atomen und der Alkylphenole mit 8 bis 16 C-Atomen im Alkylteil. In all diesen Produkten kann anstelle des Ethylenoxids zu einem gewissen Teil auch Propylenoxid (PO) angelagert sein. Weiterhin kann die endständige Hydroxylgruppe durch Veretherung mit geeigneten Alkylierungsmitteln, beispielsweise mit kurzkettigen Alkylhalogeniden, verschlossen sein. Als nichtionische Tenside eignen sich ferner langkettige Aminoxide oder Sulfoxide und auch die wasserlöslichen Alkylglykoside, deren hydrophober C₈ - C₂₀-Alkylrest mit einem meist oligomeren hydrophilen Glykosidrest glykosidisch verknüpft ist. Besonders bevorzugt werden als nichtionische Tenside Anlagerungsprodukte aus Fettalkoholen mit 10 bis 20 C-Atomen und 3 bis 8 Mol Ethylenoxid sowie 2 bis 6 Mol Propylenoxid.

Als anionische Tenside eignen sich insbesondere Tenside vom Typ der Sulfonate und Sulfate, von denen die Sulfonattenside besonders bevorzugt werden. Zu den Tensiden vom Sulfonattyp gehören insbesondere die Alkylbenzolsulfonate mit einem C₁₂ - C₁₅-Alkylrest und Olefinsulfonate, wie man sie aus C₁₂ - C₁₈-Monoolefinen mit end- oder innenständiger Bindung durch Sulfonieren mit gasförmigem Schwefeltrioxid und anschließender alkalischer oder saurer Hydrolyse der Sulfonierungsprodukte erhält. Geeignet sind auch Alkansulfonate, die aus C₁₂ - C₁₈-Alkanen durch Sulfochlorierung oder Sulfoxidation und anschließende Hydrolyse oder durch Bisulfitaddition an Olefine erhältlich sind.

Geeignete Tenside vom Sulfattyp sind die Schwefelsäuremonoester von langkettigen primären Alkoholen natürlichen oder synthetischem Ursprungs, das heißt, von Fettalkoholen, wie z. B. Kokosfettalkoholen, Oleylalkohol, Lauryl-, Myristyl-, Palmityl oder Stearylalkohol oder den C₁₀ - C₂₀-Oxoalkoholen oder sekundären Alkoholen dieser Kettenlänge. Auch die Schwefelsäuremonoester der mit 1 bis 6 Mol Ethylenoxid (EO) ethoxylierten aliphatischen langkettigen primären Alkohole bzw. ethoxylierten sekundären Alkohole sind geeignet. Ebenso eignen sich die Salze langkettiger Ethercarbonsäuren, die beispielsweise durch Umsetzung langkettiger, mit 1 bis 10 Mol EO ethoxylierter Alkohole mit Chloressigsäure erhältlich sind.

Als kationische Tenside sind insbesondere die quartären Ammoniumverbindungen zu nennen, die am zentralen Stickstoff drei kurzkettige Alkylrest mit 1 bis 3 C-Atomen und einen langkettigen Alkylrest mit 12 bis 20 C-Atomen aufweisen. In besonderen Fällen können aber auch andere kationische Tenside, wie beispielsweise die Salze von langkettigen tertiären Aminen oder quartäre Ammoniumverbindungen, die zwei langkettige Reste oder einen Heterozyklus im Molekül aufweisen, verwendet werden.

Als amphotere Tenside eignen sich insbesondere die als Alkylbetaine und Sulfobetaine bekannten Verbindungen. Es handelt sich dabei um Derivate der Aminoessigsäure, der β-Aminopropionsäure oder der 3-Aminopropansulfonsäure, in denen der Stickstoff eine langkettige Alkyl- oder N-Acylaminoalkylgruppe sowie ein oder zwei kurzkettige Alkylgruppen, insbesondere Methyl-, Carboxymethyloder Hydroxyethylgruppen, trägt.

Besonders dann, wenn beabsichtigt ist, mit der Einwirkung der wäßrigen sauren Reinigungslösung auch eine stärkere mikrobizide Wirkung zu erreichen, kann es bevorzugt sein, besondere Tenside zu verwenden, die im sauren Milieu mikrobizid wirksam sind. Beispiele solcher Tenside sind die Alkylbenzolsulfonate, die langkettigen Ethercarbonsäuren und bestimmte quartäre Ammoniumverbindungen.

Der Gehalt an Tensiden beträgt in der erfindungsgemäß verwendeten wäßrigen sauren Reinigungslösung üblicherweise nicht mehr als etwa 0,5 Gew.-%. Vorzugsweise liegt der Gehalt zwischen etwa 0,005 und etwa 0,3 Gew.-%, insbesondere zwischen etwa 0,01 und etwa 0,2 Gew.-%, jeweils bezogen auf die angewandte Reinigungslösung als Ganzes. Vorzugsweise besteht mehr als die Hälfte des Gehaltes an Tensiden aus nichtionogenen Tensiden.

Zusätzlich können die wäßrigen sauren Reinigungslösungen weitere Wirkstoffe oder Hilfsstoffe enthalten, wenn dies im Einzelfall zweckmäßig oder gewünscht sein sollte. Beispiele derartiger Wirkstoffe sind Reinigungsverstärker und antimikrobielle Wirkstoffe. Als Hilfsstoffe sind beispielsweise Schauminhibitoren, Lösungsvermittler, Korrosionsinhibitoren und Farbstoffe zu erwähnen. Der Gehalt an derartigen zusätzlichen Wirk- und Hilfsstoffen hängt von der gewünschten Wirkung ab und wird vom Fachmann in an sich bekannter Weise festgelegt. Als Beispiele derartiger Zusatzstoffe seien Octylphosphonsäure, Phosphonate, Cumolsulfonat, Xylolsulfonat und Octylslfonat genannt. Die zur Reinigung verwendeten sauren Lösungen sind vorzugsweise frei von Enzymen und/oder peroxidischen Verbindungen.

im erfindungsgemäßen Verfahren wird die Menge an Reinigungslösung in Abhängigkeit von der Größe der zu reinigenden Geräte so gewählt, daß unter allen Umständen alle zu reinigenden Oberflächen dieser Geräte von der Reinigungslösung erreicht werden. Die Einwirkzeiten bestimmen in gewissen Grenzen den Reinigungserfolg und werden entsprechend eingestellt. Da die Reinigungsleistung mit der Temperatur ansteigt, reichen bei höheren Temperaturen der Reinigungslösung kürzere Zeiten als bei Raumtemperatur für eine vollständige Reinigung aus. Daneben wirken sich mechanische Effekte, wie die Verwirbelung der Reinigungslösung und die Durchströmgeschwindigkeit der Reinigungslösung, auf das Reinigungsergebnis aus. Die genauen Einwirkzeiten werden dehalb in jedem Einzelfall empirisch bestimmt. Bei Anwendung herkömmlicher Reinigungsautomaten reichen in der Regel Einwirkzeiten von wenigen Minuten bei Temperaturen zwischen etwa 50 und etwa 90 °C für eine vollständige Reinigung aus.

Die erfindungsgemäß verwendete wäßrige saure Reinigungslösung kann grundsätzlich durch Einwiegen der einzelnen Bestandteile und Vermischen mit der ausreichenden Menge Wasser hergestellt werden. Die Dosierung kann entweder von Hand oder aber teil- oder vollautomatisch mit Hilfe geeigneter Dosiergeräte erfolgen. Gebräuchlicher ist es aber, von vorgefertigten Konzentraten auszugehen, die mehrere oder vorzugsweise alle Inhaltsstoffe der Reinigungslösung im benötigten Verhältnis enthalten. Bei Anwendung derartiger Konzentrate sind zur Herstellung der Reinigungslösung weniger Dosierungsschritte notwendig. Durch die Wiederverwendbarkeit der erfindungsgemäß eingesetzten sauren Reinigungslösung ist es nur von Zeit zu Zeit notwendig, die gesamte Menge an Reinigungslösung neu anzusetzen. In der übrigen Zeit kann man sich darauf beschränken, eine mengenmäßige und/oder gehaltsmäßige Ergänzung der im Vorratstank befindlichen gebrauchten Reinigungslösung vorzunehmen, wenn dies notwendig werden sollte. Im automatisierten Verfahren werden Menge und Wirkstoffgehalt in der Lösung durch geeignete Sensoren, wie sie für derartige Zwecke an sich bekannt sind, gemessen und mit Hilfe geeigneter Arbeitsprogramme überwacht. Auch die Dosierung der Wirkstoffe bei der Herstellung neuer Lösungen oder bei der Ergänzung der gebrauchten Lösung kann in geeigneter Weise aus entsprechenden Vorratstanks automatisch erfolgen.

Geeignete Konzentrate zur Herstellung der wäßrigen sauren Reinigungslösung haben vorzugsweise folgende Zusammensetzung:
30 - 90 Gew.-%, vorzugsweise 40 - 80 Gew.-% Säure,
1 - 20 Gew.-%, vorzugsweise 5 - 10 Gew.-% Tensid,
0 - 20 Gew.-%, vorzugsweise 0,1 - 5 Gew.-% weitere Wirk- und Hilfsstoffe und zu 100 Gew.-% Wasser
Zur leichteren Dosierung werden die Konzentrate in der Regel als homogene Flüssigkeiten formuliert, doch ist es prinzipiell auch möglich, sie in Form von Pasten, Pulvern oder Granulaten zu verwenden.

Nach dem Ablassen der wäßrigen sauren Reinigungslösung aus den zu reinigenden Melkanlagen oder Geräten werden diese mit Wasser nachgespült. In der Regel wird hierfür Leitungswasser verwendet, wenn dies mit genügender Keimfreiheit zur Verfügung steht, andernfalls wird das Leitungswasser in der notwendigen Weise aufbereitet und/oder gereinigt. Die Menge an Spülwasser wird so gewählt, daß alle störenden Rückstände der wäßrigen sauren Reinigungslösung aus den Geräten entfernt werden. Für den Fall, daß eine weitere Behandlung der Melkanlage mit einer Desinfektionslösung vorgesehen ist, werden selbstverständlich an die Qualität des Spülwassers geringere Anforderungen gestellt. Das aus den Geräten ablaufende Spülwasser kann in einem geeigneten Tank aufgefangen werden und kann zum Vorspülen der Geräte vor der Einwirkung der wäßrigen sauren Reinigungslösung verwendet werden.

Wenn besondere Anforderungen an die Keimfreiheit der Melkanlagen oder Geräte gestellt werden, kann es zweckmäßig sein, nach dem soeben beschriebenen Spülgang eine Behandlung der Anlagen oder Geräte mit einer eigenen Desinfektionslösung vorzusehen. Diese Lösung enthält an sich bekannte Desinfektionsstoffe, vorzugsweise in wäßriger Lösung. Die Auswahl der Wirkstoffe richtet sich nach dem zu bekämpfenden Keimspektrum und der gewünschten Desinfektionsgeschwindigkeit. Vorzugsweise werden toxikologisch unbedenkliche Desinfektionswirkstoffe eingesetzt, die bereits in niedriger Konzentration bei Raumtemperatur eine schnelle Desinfektion gewährleisten. Besonders bewährt haben sich für die Desinfektion von Melkanlagen verdünnte wäßrige Lösungen von Peressigsäure, wie man sie beispielsweise durch Verdünnen geeigneter handelsüblicher Konzentrate mit Wasser erhält. Derartige Konzentrate enthalten neben Peressigsäure in der Regel Essigsäure, Wasserstoffperoxid sowie mehr oder weniger große Mengen an Mineralsäure, insbesondere Schwefelsäure, sowie Wasser. Zur Anwendung im erfindungsgemäßen Verfahren werden sie soweit verdünnt, daß in der angewendeten Desinfektionslösung vorzugsweise etwa 0,005 Gew.-% bis etwa 0,1 Gew.-% an Peressigsäure vorliegen. Die Menge an Desinfektionslösung wird wiederum so gewählt, daß alle zu desinfizierenden Oberflächen der Geräte im ausreichenden Maße erreicht werden. Die aus den Geräten abfließende Desinfektionslösung kann verworfen werden, doch besteht auch die Möglichkeit, sie zusammen mit den Spülwässern gegebenenfalls in dem Tank zu stapeln, dessen Inhalt zur Vorspülung vor dem eigentlichen Reinigungsgang verwendet wird.

An den Desinfektionsschritt schließt sich nochmals ein Spülgang an, um Reste des Desinfektionsmittels aus der Anlage zu entfernen. Die Spülung erfolgt mit Wasser, wobei an die Qualität des Wassers die bereits oben genannten Anforderungen zu stellen sind. Auch das hier ablaufende Spülwasser kann gegebenenfalls zur Vorspülung wieder verwendet werden.

### Beispiele

Zur automatisierten Reinigung einer Melkanlage mit 16 Melkplätzen wurde ein Spülautomat Envistar der Firma Westfalia, Oelde, eingesetzt. Das Reinigungsverfahren wies dabei folgende Schritte auf:
a) Vorspülen mit gebrauchter Spül- und Desinfektionslösung
b) Reinigen mit wäßriger Reinigungslösung, die auf 85 °C erhitzt wurde
c) Zwischenspülen mit Leitungswasser
d) Desinfizieren mit Desinfektionslösung
e) Nachspülen mit Leitungswasser

Der Spülautomat war in der Lage, nach Abschluß der Melkvorgänge die Reinigung durch Steuerung der Flüssigkeitsmengen und der Behandlungszeiten vollkommen automatisch durchzuführen. Auch die Herstellung der Reinigungslösung und der Desinfektionslösung durch Verdünnen entsprechender Konzentrate mit Wasser wurde von diesem Automaten gesteuert. Die für das Vorspülen verwendete Flüssigkeit wurde einem Vorratsbehälter entnommen und bestand aus den aus der Anlage nach den Schritten c, d und e ablaufenden Spülwässern bzw. Desinfektionslösungen. Die zur Reinigung verwendete wäßrige Lösung wurde ebenfalls einem Sammelbehälter entnommen und nach der Reinigung wieder in diesem Sammelbehälter aufgefangen bzw. aus diesem Behälter während der Reinigung durch die Anlage umgepumpt. Der Behälter für die Reinigungslösung ist wärmeisoliert und die Lösung konnte darin mittels einer Heizvorrichtung auf die Gebrauchstemperatur erwärmt werden. Die nach dem Vorspülgang aus der Anlage austretende Lösung wurde in jedem Falle in den Abfluß abgeleitet.

Die erfindungsgemäß zur Reinigung verwendete Lösung (A) hatte zu Beginn folgende Zusammensetzung:
0,35 Gew.-% Phosphorsäure
0,032 Gew.-% C_{12/14}-Fettalkohol + 5 EO + 4 PO
zu 100 Gew.-% Wasser

Zum Vergleich wurde wurde eine Reinigungslösung (B) verwendet, die zu Beginn folgende Zusammensetzung hatte:
0,028 Gew.-% Kaliumhydroxid
0,035 Gew.-% Natriumtriphosphat
0,10 Gew.-% Natriumnitrilotriacetat
0,014 Gew.-% Nichtionisches Tensid
zu 100 Gew.-% Wasser

Zur Desinfektion wurde sowohl im erfindungsgemäßen Verfahren als auch in den Vergleichsversuchen eine jeweils frisch angesetzte wäßrige Peressigsäurelösung folgender Zusammensetzung verwendet:
0,03 Gew.-% Peressigsäure
0,078 Gew.-% Essigsäure
0,054 Gew.-% Wasserstoffperoxid
0,024 Gew.-% Schwefelsäure
zu 100 Gew.-% Wasser

Die Reinigungs- und Desinfektionslösungen wurden vom verwendeten Reinigungsautomaten durch Verdünnung mit Wasser aus Konzentraten der folgenden-Zusammensetzung erzeugt.
A:
   50 Gew.-% Phosphorsäure
   4,5 Gew.-% C_{12/14}-Fettalkohol + 5 EO + 4 PO
   45,5 Gew.-% Wasser
B:
   4 Gew.-% Kaliumhydroxid
   5 Gew.-% Pentannatriumtriphosphat
   14 Gew.-% Natriumnitrilotriacetat
   2 Gew.-% Nichtionisches Tensid (Alkylethoxylatpropoxylat)
   75 Gew.-% Wasser

### Desinfektionslösung:

10 Gew.-% Peressigsäure
26 Gew.-% Essigsäure
18 Gew.-% Wasserstoffperoxid
8 Gew.-% Schwefelsäure
38 Gew.-% Wasser

Nach Abschluß des gesamten Melkvorgangs lief im einzelnen folgender Reinigungsvorgang ab:
a) Vorspülen mit 70 Litern der Vorspülflüssigkeit innerhalb von 6 Minuten.
b) Umwälzen der auf 85 °C erhitzten Reinigungslösung A oder B durch die gesamte Melkanlage einschließlich der an jedem Melkplatz befindlichen Milchmengenzähler während 10 Minuten unter Rückleitung der Reinigungslösung in den Sammeltank.
c) Durchspülen der gesamten Anlage mit 50 Litern Trinkwasser und Auffangen der Spüllösung im Vorspültank.
d) Einleiten von 20 Litern frisch hergestellter Desinfektionslösung in die Anlage und Desinfektion der Anlage während einer Einwirkzeit von 5 Minuten.
e) Ausdrücken der in der Anlage enthaltenen Desinfektionslösung und Nachspülen der Anlage mit 25 Litern Frischwasser, wobei die gesamte ablaufende Flüssigkeit im Vorspültank aufgefangen wurde.

Die Reinigung der Anlage wurde sowohl mit dem erfindungsgemäßen Verfahren als auch mit dem Verfahren, in dem die alkalische Reinigungslösung B benutzt wurde, jeweils 7 Tage lang, das heißt, während 14 Melkvorgängen unter Wiederverwendung der anfangs frisch angesetzten Reinigungslösung durchgeführt. In beiden Fällen wurden während dieser Zeit nach jedem Reinigungsgang 0,15 Gew.-% des Konzentrats zur Ergänzung der Reinigungslösung hinzugefügt. Nach dieser Zeit wurde der als besonders problematisch geltende innenraum der Milchmengenzähler auf Ablagerungen untersucht. Während sich hier bei der Reinigung mit der alkalischen Reinigungslösung B fettige, matte Beläge gebildet hatten, waren in der gleichen Versuchsdauer bei Anwendung der wäßrigen sauren Reinigungslösung A keinerlei Beläge gebildet worden. Auch an anderen Stellen der Anlage wurde hierbei keinerlei Beläge gefunden. Darüber hinaus wurde festgestellt, daß die Beläge, die bei Reinigung mit dieser oder anderen alkalischen Reinigungslösungen in den Geräten verblieben, bei Umstelllung des Reinigungsverfahrens auf die Verwendung der wäßrigen sauren Reinigungslösung A meist schon bei einmaliger Anwendung vollständig abgebaut wurden.

## Patentansprüche

1. Verfahren zur Reinigung von Melkanlagen unter Verwendung einer wäßrigen Reinigungslösung, bei dem diese wäßrige Reinigungslösung wenigstens zum Teil nach erfolgter Reinigung der Anlage aufgefangen und nach erneutem Gebrauch der Melkanlage wiederum zur Reinigung verwendet wird, **dadurch gekennzeichnet, daß** die Reinigungslösung einen sauren pH-Wert aufweist und daß zur Reinigung der Melkanlage neben dieser sauren Reinigungslösung keine alkalische Reinigungslösung eingesetzt wird.

2. Verfahren nach Anspruch 1, bei dem die saure Reinigungslösung wenigstens 6 mal, vorzugsweise wenigstens 14 mal zur Reinigung verwendet wird, ehe sie durch frische Reinigungslösung ersetzt wird.

3. Verfahren nach einem der Ansprüche 1 bis 2, bei dem die zu reinigende Melkanlage vor der Behandlung mit der sauren Reinigungslösung mit Wasser oder mit einer stark verdünnten sauren Reinigungslösung und/oder Desinfektionslösung gespült und nach dem eigentlichen Reinigungsschritt mit Wasser gespült wird.

4. Verfahren nach einem der Ansprüche 1 bis 3, bei dem die Melkanlage nach der Einwirkung der sauren Reinigunglösung und gegebenenfalls einem Zwischenspülgang mit einer Desinfektionslösung behandelt und anschließend nochmals mit Wasser gespült wird.

5. Verfahren nach einem der Ansprüche 1 bis 4, bei dem die wäßrige, saure Reinigungslösung im erwärmten Zustand, vorzugsweise mit Anfangstemperaturen oberhalb von 40 °C, insbesondere zwischen 50 °C und 90 °C, auf die Melkanlage einwirkt.

6. Verfahren nach einem der Ansprüche 1 bis 5, bei dem die saure Reinigungslösung eine Säure aus der Gruppe Phosphorsäure, Schwefelsäure, Amidosulfonsäure, Methansulfonsäure, Ameisensäure, Citronensäure und deren Gemische vorzugsweise in Mengen von 0,1 bis 1,5 Gew.-%, insbesondere von 0,2 bis 0,6 Gew.-%, enthält.

7. Verfahren nach einem der Ansprüche 1 bis 6, bei dem die wäßrige saure Reinigungslösung Tenside, vorzugsweise aus der Gruppe der nichtionischen Tenside, in Mengen zwischen 0,005 und 0,3 Gew.-%, vorzugsweise zwischen 0,01 und 0,2 Gew.-% enthält.

8. Verwendung einer wäßrigen sauren Lösung zur Reinigung von Melkanlagen, **dadurch gekennzeichnet**, däß diese Lösung nach Gebrauch wenigstens zum Teil aufgefangen und nach erneutem Gebrauch der Melkanlage wiederum zur Reinigung eingesetzt wird und daß zur Reinigung der Melkanlage neben dieser sauren Reinigungslösung keine alkalische Reinigungslösung eingesetzt wird.

9. Verwendung nach Anspruch 8, bei der die wäßrige saure Lösung im erwärmten Zustand, vorzugsweise mit Anfangstemperaturen oberhalb von 40 °C, insbesondere zwischen 50 °C und 90 °C, auf die Melkanlage einwirkt.

10. Verwendung nach einem der Ansprüche 8 oder 9, bei der die wäßrige saure Reinigungslösung Tenside, vorzugsweise aus der Gruppe der nichtionischen Tenside in Mengen zwischen 0,005 und 0,3 Gew.-%, vorzugsweise zwischen 0,01 und 0,2 Gew.-%, enthält.

## Claims

1. A process for cleaning milking machines using a water-based cleaning solution, in which this cleaning solution is at least partly collected after cleaning of the machine and, after re-use of the milking machine, is again used for cleaning, **characterized in that** the cleaning solution has an acidic pH value and, apart from this acidic cleaning solution, no alkaline cleaning solution is used to clean the milking machine.

2. A process as claimed in claim 1, **characterized in that** the acidic cleaning solution is used for cleaning at least 6 times and preferably at least 14 times before it is replaced by fresh cleaning solution.

3. A process as claimed in claim 1 or 2, **characterized in that** the milking machine to be cleaned is rinsed with water or with a highly dilute acidic cleaning solution and/or disinfecting solution before being treated with the acidic cleaning solution and is rinsed with water after the actual cleaning step.

4. A process as claimed in any of claims 1 to 3, **characterized in that**, after application of the acidic cleaning solution and optionally rinsing, the milking machine is treated with a disinfecting solution and is then rerinsed with water.

5. A process as claimed in any of claims 1 to 4, **characterized in that** the water-based acidic cleaning solution is applied to the milking machine in the heated state, preferably with starting temperatures above 40°C and more particularly in the range from 50°C to 90°C.

6. A process as claimed in any of claims 1 to 5, **characterized in that** the acidic cleaning solution contains an acid from the group consisting of phosphoric acid, sulfuric acid, amidosulfonic acid, methanesulfonic acid, formic acid, citric acid and mixtures thereof in quantities of preferably 0.1 to 1.5% by weight and more preferably 0.2 to 0.6% by weight.

7. A process as claimed in any of claims 1 to 6, **characterized in that** the water-based acidic cleaning solution contains surfactants, preferably from the group of nonionic surfactants, in quantities of 0.005 to 0.3% by weight and preferably in quantities of 0.01 to 0.2% by weight.

8. The use of a water-based acidic solution for cleaning milking machines, **characterized in that** this solution is at least partly collected after use and, after reuse of the milking machine, is again used for cleaning and **in that**, apart from this acidic cleaning solution, no alkaline cleaning solution is used to clean the milking machine.

9. The use claimed in claim 8, **characterized in that** the water-based acidic solution is applied to the milking machine in the heated state, preferably with starting temperatures above 40°C and more particularly between 50°C and 90°C.

10. The use claimed in claim 8 or 9, **characterized in that** the water-based acidic cleaning solution contains surfactants, preferably from the group of nonionic surfactants, in quantities of 0.005 to 0.3% by weight and preferably in quantities of 0.01 to 0.2% by weight.

## Revendications

1. Procédé de nettoyage d'installations de traite utilisant une solution de nettoyage aqueuse, dans lequel on recueille au moins en partie cette solution de nettoyage aqueuse après la fin du nettoyage de l'installation et on la réutilise après une nouvelle utilisation de l'installation de traite,
**caractérisé en ce que**
la solution de nettoyage présente un pH acide, et en-dehors de cette solution de nettoyage acidc, aucune solution de nettoyage alcaline n'est utilisée pour nettoyer l'installation de traite.

2. Procédé selon la revendication 1,
dans lequel
on utilise la solution de nettoyage acide au moins six fois, de préférence au moins quatorze fois pour le nettoyage, avant de la remplacer par une solution de nettoyage fraîche.

3. Procédé selon l'une des revendications 1 à 2,
dans lequel
on rince l'installation de traite à nettoyer, avant le traitement avec la solution de nettoyage acide, avec de l'cau ou avec une solution de nettoyage acidc fortement diluée et/ou une solution désinfectante, et/ou on la rince avec de l'eau après l'étape de nettoyage proprement dite.

4. Procédé selon l'une des revendications 1 à 3,
dans lequel
on purifie l'installation de traite avec une solution désinfectante après l'action de la solution de nettoyage acide et le cas échéant après un processus de rinçage intermédiaire, puis on rince encore une fois avec de l'eau.

5. Procédé selon l'une des revendications 1 à 4,
dans lequel
la solution de nettoyage acide aqueuse agit sur l'installation de traite à l'état chauffé, de préférence à des températures de départ supérieures à 40°C, en particulier comprises entre 50°C et 90°C.

6. Procédé selon l'une des revendications 1 à 5,
dans lequel
la solution de nettoyage acide contient un acidc du groupe constitué par l'acide phosphorique, l'acide sulfurique, l'acide amidosulfonique, l'acide méthanesulfonique, l'acide formique, l'acide citrique et leurs mélanges, de préférence à de quantités allant de 0,1 % à 1,5 % en poids, en particulier de 0,2 % à 0,6 % en poids.

7. Procédé selon l'une des revendications 1 à 6,
dans lequel
la solution de nettoyage acide aqueuse contient des agents tensioactifs, de préférence du groupe des agents tensioactifs non ioniques, à des quantités comprises entre 0,005 et 0,3 % en poids, de préférence entre 0,01 % et 0,2 % en poids.

8. Utilisation d'une solution acide aqueuse pour le nettoyage d'installations de traite,
**caractérisée en ce qu'**
on recueille au moins en partie cette solution après emploi, et on la réutilise à nouveau aux fins de nettoyage après nouvelle utilisation de l'installation de traite, et
en dehors de cette solution de nettoyage acide, aucune solution de nettoyage alcaline n'est utilisée pour le nettoyage de l'installation de traite,.

9. Utilisation selon la revendication 8,
dans laquelle
la solution acide aqueuse agit sur l'installation de traite à l'état chauffé, de préférence à des températures initiales supérieures à 40°C, en particulier comprises entre 50°C et 90°C.

10. Utilisation selon l'une des revendications 8 ou 9,
dans laquelle
la solution de nettoyage acide aqueuse contient des agents tensioactifs, de préférence du groupe des agents tensioactifs non ioniques, à des quantités comprises entre 0,005 et 0,3 % en poids, de préférence entre 0,01 et 0,2 % en poids.
